# EUROPEAN PATENT APPLICATION

(11) **EP 3 671 619 A1**
(43) Date of publication of application: **24.06.2020**
(21) Application number: 19216764.1
(22) Date of filing: 17.12.2019
(51) Int. Cl.: G06Q 50/06

(54) **METHOD AND ARRANGEMENT FOR PROVIDING ELECTRIC ENERGY**

(30) Priority: 17.12.2018 FI 20186100
(71) Applicant: UPM Energy Oy, 00100 Helsinki (FI)
(72) Inventor: Hiekkanen, Lauri, 02680 Espoo (FI); Haromo, Juha, 42100 Jämsä (FI); Häkli, Jukka-Pekka, 00200 Helsinki (FI)
(74) Representative: Papula Oy

(57) **Abstract**

A method and an arrangement comprise processing orders of electric energy made by a set of participants. It comprises receiving orders and possible offers of electric energy made by several of said participants for a time period extending to the end of a current delivery period. In addition, it comprises maintaining compilation data on the orders and possible offers of electric energy received from said participants for said time period. Change data received from one or more participants concerning an order or offer of electric energy of a participant using a respective participant interface are responded to by forwarding queries to the other participants about a possibility of said other participants to respond to change needs according to said received change data during said time period. Said participants are kept anonymous to each other in all of the above-described data exchange.

## Description

### TECHNICAL FIELD

The invention generally relates to the provision of electric energy from production plants over an electrical grid to participants. Specifically, the invention proposes how the participants may obtain a needed quantity of electric energy proportioned to both of their pre-orders and their actual needs that are about to be realized.

### STATE OF THE ART

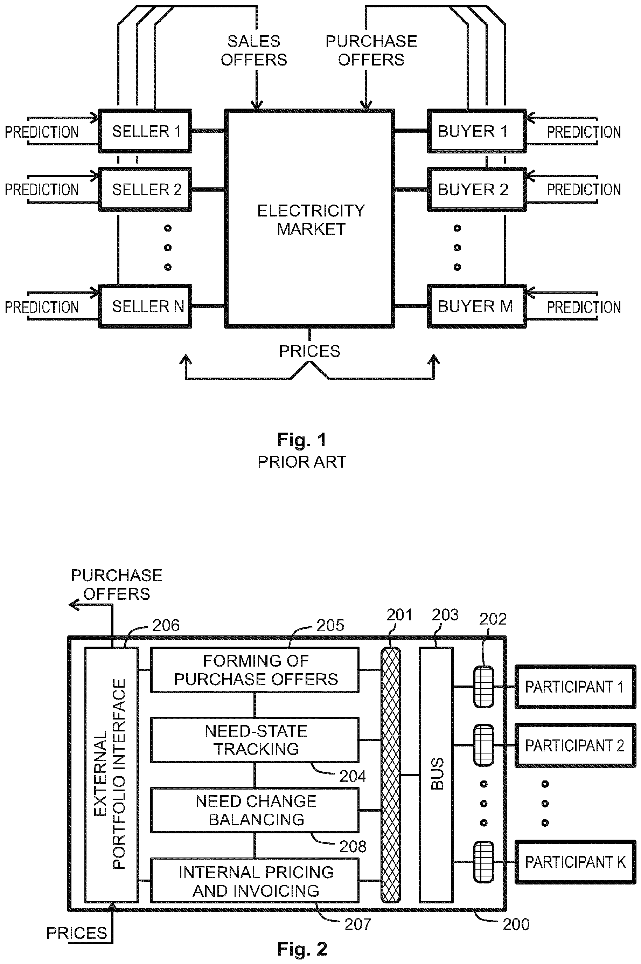

According to the state of the art, the parties operating in the electricity market may be categorized as sellers, grid operators, and buyers. Fig. 1 illustrates one mode of the prior art to arrange the operation of the electricity market. Grid operators act as intermediaries in block 101 illustrated in the middle in order to match electricity production to consumption at a given time. Buyers make pre-orders to the grid operator for needed electricity according to a specific ordering schedule. These pre-orders are indicated in Fig. 1 as purchase offers, and they must be made by a specific time limit which expires before start of a delivery period to which the purchase offer applies. Correspondingly, sellers make sales offers to the grid operator for electricity they consider producible during the delivery period. There may be a different number of sellers and buyers (i.e. in Fig. 1, the numbers N ≠ M). The same party may operate as a buyer and a seller, if it has electricity production as well as significant consumption.

There may be many levels of delivery periods and respective time limits. For example, the delivery periods of the Nord Pool power exchange operating in the Nordic and Baltic countries are, at the time of writing this text, a day and an hour, and there are plans to introduce also shorter delivery periods, for example of fifteen minutes. In the spot market the delivery period is the next day with an accuracy of one hour and the respective time limit for pre-orders is at 12 CET of the previous day. In the Elbas market the delivery period is the next hour and the respective time limit is 30 minutes before the start of the service hour.

In general, the more accurately a buyer is able to predict the realized electricity need in the pre-order, the cheaper the unit price of the ordered electricity will be. If the realized consumption is higher or lower than the quantity ordered in the pre-order, the buyer must compensate for the difference by paying a surcharge. This is a significant disadvantage for the buyer, because predicting the electricity need depends on many factors, only some of them being controllable by the buyer. Often the buyer experiences financial losses when the electricity need changes unexpectedly without the buyer being able to control the circumstances. The longer the delivery period for which the buyer must pre-order electricity, the more important the role of such uncertainty factors becomes. The buyer may also suffer losses if, because of a varying volume of orders, material conditions, a hardware failure or another reason, it would be advantageous for the buyer to make a short term change in its operations, but a corresponding change in electricity need as compared to the pre-order would become too expensive. In addition, from the buyer's point of view it may be considered a disadvantage that in the electricity market operating as illustrated in Fig. 1, the buyer is required to have a specific minimum size. A buyer capable of predicting its electricity need very accurately or if necessary, capable of changing its consumption behaviour is not able to make full use of this capability if, in terms of electricity need, it is too small to operate in the electricity market as an independent buyer.

### BRIEF DESCRIPTION OF THE INVENTION

An object of the present invention is to disclose a method and an arrangement for processing orders of electric energy made by participants in such a way that the uncertainty factors of the prior art and their disadvantageous effect can be reduced. It is also an object of the invention that the method and the arrangement according to the invention enable appropriate responding to changes in the predicted electricity need in a quicker time frame than in the prior art. Further, an object of the invention is that participants capable of dynamically adjusting their electricity need will be able to make use of this capability.

The objects of the invention are achieved by arranging a set of electric energy participants as a portfolio which operates towards the electricity market as one participant, but the participants of which have a possibility to make changes in their electricity need to compensate for each other within the portfolio during a current delivery period, and by arranging the connection between the participants and portfolio management over a secured bus, such that if desired, the participants may operate anonymously within the portfolio.

A first aspect of the invention relates to an arrangement for processing orders of electric energy made by a set of participants. The arrangement comprises a management interface for processing data representing orders and possible offers of electric energy made by several of said participants for a time period extending to the end of a current delivery period. The arrangement comprises a set of participant interfaces, each arranged for processing data representing orders and possible offers of electric energy made by one of said participants for said time period. The arrangement comprises a secured data transfer bus between said management interface and said participant interfaces, the secured data transfer bus being arranged to keep said participants anonymous to each other. The arrangement is arranged to maintain compilation data on the orders and possible offers of electric energy received via said participant interfaces for said time period. The arrangement is additionally arranged to respond to change data received over one or more of said participant interfaces concerning an order or offer of electric energy of a participant using the participant interface by forwarding queries over the others of said participant interfaces to the other participants using said other participant interfaces about a possibility of said other participants to respond to change needs according to said received change data during said time period.

According to one embodiment, the arrangement is arranged to respond to an additional order received over one of said participant interfaces for said time period to increase the earlier electric energy order of a participant using that participant interface by forwarding queries over the others of said participant interfaces to the other participants using said other participant interfaces about a possibility of said other participants to decrease their earlier electric energy order during said time period.

According to one embodiment, the arrangement is arranged to respond to an offer received over one of said participant interfaces for said time period to decrease the earlier electric energy order of a participant using that participant interface by forwarding queries over the others of said participant interfaces to the other participants using said other participant interfaces about willingness of said other participants to increase their earlier electric energy order during said time period.

According to one embodiment, the arrangement is arranged to use as one of said participants a battery pack, the quantity of electric energy charged in or discharged from the battery pack being used by the arrangement to cover, during said delivery period, at least part of a difference between a predicted total electricity consumption and a realized electricity consumption of said participants.

According to one embodiment, the arrangement is arranged to perform operations encompassing
- said receiving of change data over at least one of said participant interfaces concerning an order or offer of electric energy of a participant using the participant interface,
- said forwarding of queries over the others of said participant interfaces to the other participants using the other participant interfaces about a possibility of said other participants to respond to change needs according to said received change data during said time period,
- receiving responses to said queries over said participant interfaces, and
- updating said compilation data using the change data and the responses received via said participant interfaces
in a time cycle of less than ten minutes, more preferably less than one minute, and most preferably less than ten seconds.

According to one embodiment, the arrangement is arranged to perform said operations in a time cycle the length of which depends on the quantity of electric energy related to the change data received via one or some of said participant interfaces.

A second aspect of the invention relates to a method for processing orders of electric energy made by a set of participants. The method comprises receiving orders and possible offers of electric energy made by several of said participants for a time period extending to the end of a current delivery period. The method comprises maintaining compilation data on the orders and possible offers of electric energy received from said participants for said time period, and responding to change data received from one or more participants concerning an order or offer of electric energy of a participant using a respective participant interface by forwarding queries to the other participants about a possibility of said other participants to respond to change needs according to said received change data during said time period. The method comprises keeping said participants anonymous to each other in all of the above-described data exchange.

According to one embodiment, the method comprises responding to an additional order received from one of said participants for said time period to increase the earlier electric energy order of that participant by forwarding queries to said other participants about a possibility of said other participants to decrease their earlier electric energy order during said time period.

According to one embodiment, the method comprises responding to an offer received from one of said participants for said time period to decrease the earlier electric energy order of that participant by forwarding queries to said other participants about willingness of said other participants to increase their earlier electric energy order during said time period.

According to one embodiment, the method comprises using a battery pack, the electric energy charged in or discharged from the battery pack being used to cover, during said delivery period, at least part of a difference between a predicted total electricity consumption and a realized electricity consumption of said participants.

According to one embodiment, the method comprises performing operations encompassing
- said receiving of change data over at least one of said participant interfaces concerning an order or offer of electric energy of a participant using the participant interface,
- said forwarding of queries over the others of said participant interfaces to the other participants using the other participant interfaces about a possibility of said other participants to respond to change needs according to said received change data during said time period,
- receiving responses to said queries over said participant interfaces, and
- updating said compilation data using the change data and the responses received via said participant interfaces
in a time cycle of less than ten minutes, more preferably less than one minute, and most preferably less than ten seconds.

According to one embodiment, the method comprises performing said operations in a time cycle the length of which depends on the quantity of electric energy related to the change data received from one or some of said participants.

A third aspect of the invention relates to a computer program product including one or more sets of machine-readable instructions which, when executed by one or more processors, are arranged to cause the performing of the method according to any of the embodiments described above. The computer program product may be stored on one or more machine-readable storage media.

### DESCRIPTION OF THE FIGURES

The invention and its embodiments will be described in more detail below with reference to the accompanying figures, in which:
**Fig. 1** illustrates the operation of electricity market,
**Fig. 2** illustrates an arrangement according to one embodiment of the invention,
**Fig. 3** illustrates electricity needs of participants in a same portfolio and how they change in a first situation,
**Fig. 4** illustrates data transfer in the example situation of Fig. 3,
**Fig. 5** illustrates electricity needs of participants in a same portfolio and how they change in a second situation,
**Fig. 6** illustrates data transfer in the example situation of Fig. 5,
**Fig. 7** illustrates electricity needs of participants in a same portfolio and how they change in a third situation,
**Fig. 8** illustrates data transfer in the example situation of Fig. 7,
**Fig. 9** illustrates electricity needs of participants in a same portfolio and how they change in a fourth situation,
**Fig. 10** illustrates data transfer in the example situation of Fig. 9,
**Fig. 11** illustrates electricity needs of participants in a same portfolio and how they change in a fifth situation,
**Fig. 12** illustrates data transfer in the example situation of Fig. 11,
**Fig. 13** illustrates electricity needs of participants in a same portfolio and how they change in a sixth situation,
**Fig. 14** illustrates data transfer in the example situation of Fig. 11, and
**Fig. 15** illustrates an example of continuously updated prediction calculation.

### DETAILED DESCRIPTION OF THE INVENTION AND ITS EMBODIMENTS

Fig. 2 illustrates an arrangement 200 for processing orders of electric energy made by a set of participants. As illustrated in Fig. 2, there are K participants, where K is a positive integer. The minimum number of participants is two, and the maximum number need not be limited due to the present invention. The number of participants may be measured by their combined electricity need that is sufficiently high for the combined electricity need to allow operation as a party in some electricity market.

The participants are arranged as a portfolio, which means that the electricity needs of these participants, and orders and possible offers relating to the electricity needs, may at least to some extent be managed as a whole. The portfolio has a management entity which has agreed with each participant that the portfolio management entity may operate as a sort of intermediary between the participant and the electricity market, such that at least a significant portion of electricity orders and possible offers of the participant are transmitted via the portfolio management entity.

The participants may be mainly considered as buyers of electric energy. However, this is not a limiting feature in the invention, as one or some of the participants may be sellers of electric energy. It is also possible that a participant is both a buyer and a seller, either at the same time or alternately, depending on the needs of the participant and the possibilities of the participant to produce electricity under given conditions.

The arrangement comprises a management interface 201 for processing data representing orders and possible offers of electric energy made by several (or all) participants. Specifically, the discussion below will firstly focus on orders for a time period extending to the end of a current delivery period. The current delivery period refers to a delivery period for which a time limit for pre-orders in the electricity market has expired. For example, for the spot market in the Nord Pool power exchange, where the actual delivery period is one calendar day and the respective time limit for pre-orders is at 12 CET of the previous day, the current delivery period as meant herein starts on expiry of that time limit at 12 CET and lasts until the end of the next calendar day. The management interface 201 is intended to be used by the portfolio management entity.

The arrangement comprises a set of participant interfaces, a first participant interface 202 being indicated as an example. Each participant interface is arranged for processing data representing orders and possible offers of electric energy made by one of the above-mentioned participants for the above-mentioned time period. Each participant interface is thus participant-specific in the sense that one participant may deal with the arrangement via the interface, and exchange and process its orders and offers of electric energy without the other participants having access to the data transmitted between that participant and the portfolio management entity.

The arrangement comprises a secured data transfer bus 203 between the management interface 201 and the participant interfaces 202. Securing the data transfer bus 203 has the same purpose as the participant-specificness of the participant interfaces 202, i.e. to ensure that the data on the electricity need, the orders and the offers of a specific participant are and remain only available to that participant and the portfolio management entity. Security as a concept encompasses, for instance, protection against hacking, i.e. unauthorized access to data; anonymity, i.e. that the identity of an operating party is only disclosed to parties authorized to know it; failure protection, i.e. ensuring that data transfer will function also during predictable failures; authentication, i.e. ensuring that the identity of the parties in data transfer is as claimed; and non-repudiation, i.e. that no party may afterwards argue that some data sent by the party would not actually be sent by it. Securing the data transfer bus 203 and ensuring the participant-specificness of a specific participant interface may be done using cryptographic methods which are known per se and need not be described in any more detail herein.

The mode of implementing the participant-specific participant interface 202 in technical terms may vary, for example according to the technical capacity of the participant to participate in at least partly automated data exchange and how actively the participant intends to participate in the operation described in this text. For advanced system integration, for example, the participant interface 202 may be substantially a fixed connection where it is possible to transmit data in both directions in message format. Technically simpler solutions may include various application programming interfaces (API) or web-site-based configurations.

The arrangement 200 illustrated in Fig. 2, specifically the part serving the portfolio management entity, is arranged to maintain compilation data on the orders and offers of electric energy received by the arrangement via the participant interfaces 202 for the above-mentioned time period. In other words, the arrangement 200 is capable of maintaining up-to-date data, not only on the orders and possible offers of electric energy each participant has made, but also on the total electric energy need these orders and possible offers represent. This ability of the arrangement is schematically represented in Fig. 2 by a need-state tracking block 204.

Via the participant interface, the participants may make orders and offers of electric energy, both before expiry of the time limit for pre-orders relating to a specific delivery period, but also after the expiry. Processing of the orders and the offers made by the participants in the arrangement differs according to whether they have been made before the expiry of said time limit (i.e. before the start of the delivery period) or after the expiry (i.e. during the delivery period). The orders made before expiry of the time limit may be referred to as pre-orders. The arrangement is arranged to collect the pre-orders of electric energy made before expiry of the time limit into a collective order which, as measured by the quantity of ordered electric energy, is sufficiently large to be recognized as a purchase offer in the electricity market from which the electricity needed by the participants is to be acquired. The functionality for forming the purchase offers is schematically illustrated in Fig. 2 as a forming of purchase offers block 205. The arrangement additionally comprises an external portfolio interface 206 over which said purchase offer may be provided to a grid operator operating in said electricity market.

The arrangement is arranged to receive, over the external portfolio interface 206, price data representing a price determined in the electricity market for the electricity ordered according to the above-mentioned purchase offer. The arrangement is also arranged to derive, from these price data, participant-specific prices corresponding to the quantity of electricity ordered by each participant in the pre-order. In the schematic illustration of Fig. 2, this functionality is included in an internal pricing and invoicing block 207.

Orders of the participants (or other data relating to the quantity of electric energy ordered or offered by a participant in a pre-order) made after expiry of the above-mentioned time limit are referred to as change data in this text. In response to receiving change data from one participant, over the participant interface used by that participant, the arrangement is arranged to forward queries over the other participant interfaces to the other participants. These queries relate to a possibility of the other participants to respond to change needs according to the change needs received from said one participant. This specifically means responding to these change needs during the time period extending to the end of a current delivery period. In the schematic illustration of Fig. 2, the functionality of the arrangement specializing in processing the change data and the queries is included in a need change balancing block 208.

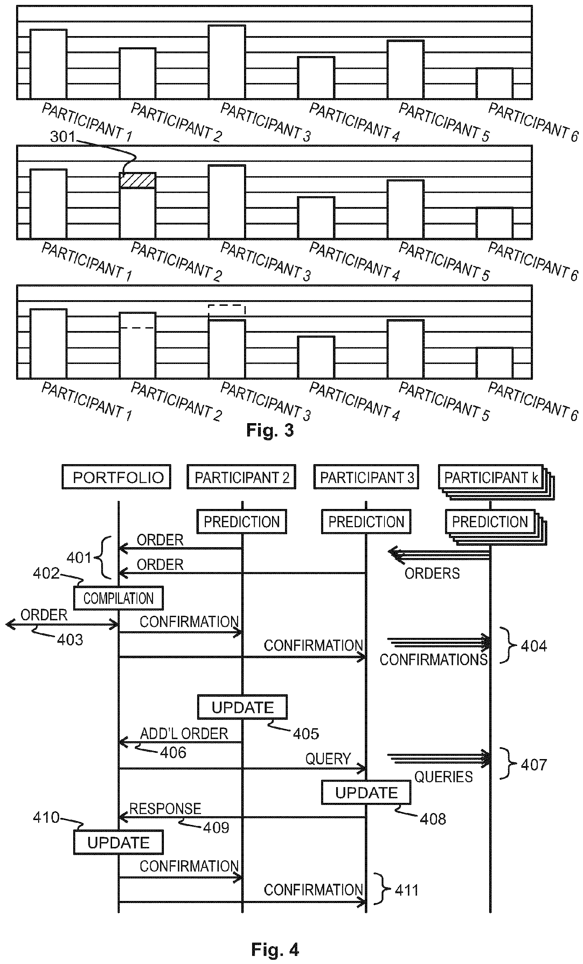

The functionalities discussed above will now be described by way of examples with reference to Fig. 3-12. The examples illustrated in the figures differ from each other to some extent as to the steps where specific data are transmitted and how they are processed. The examples are not mutually exclusive; in other words, the arrangement may be arranged to operate such that any operation illustrated in the examples is possible and that such operations may be alternated depending on what is the most practical in a given situation.

Fig. 3 illustrates one imaginary example of development of the electricity need of six participants in the same portfolio. The top bar chart illustrates a pre-order of each participant for a specific delivery period. The arrangement according to Fig. 2 has thus received, over the participant interfaces, the pre-orders according to the top bar chart of Fig. 3 from the participants before expiry of the time limit for making the pre-orders for the delivery period discussed herein. In the communication scheme of Fig. 4, these pre-orders are indicated as step 401. The quantity of electricity ordered by each participant as a pre-order is based on a participant-specific prediction made by the participant. Participants 2 and 3 are indicated separately in Fig. 4, because in this example their operation illustrates adaptation to changes in the need of electric energy within the portfolio. The column on the right side in Fig. 4 represents participants 1, 4, 5 and 6 collectively.

Step 402 in Fig. 4 represents collecting the pre-orders 401 of electric energy made before expiry of the time limit into a collective order, and step 403 indicates how the electric energy pre-ordered collectively by the portfolio is ordered from the electricity market. Step 404 indicates how the arrangement confirms to the participants that the quantities of electricity according to their pre-orders have been ordered. In this connection the arrangement may also inform the participants of the price for the quantity of electricity according to their pre-orders in case no relevant factors are changed. If, when implementing step 404, the time limit by which the pre-orders for the delivery period discussed herein must be made has not yet expired, one or some participants may still change their pre-order. This would mean repeating steps 401, 402, 403 and 404 in Fig. 4.

It is assumed herein that after said time limit has expired, and thus after the delivery period has started, participant 2 notes that its electricity consumption in this delivery period will be increased by block 301 from the prediction on the basis of which participant 2 made the pre-order. When participant 2 has made this observation in its prediction and tracking process (update 405), it sends corresponding change data over the participant interface used by the participant to the arrangement illustrated in Fig. 2. Because it is an addition to the pre-order of participant 2, the change data indicated as step 406 are referred to as an additional order in Fig. 4.

Under control of the portfolio management entity, the arrangement reacts to the change data by sending a query to participants 1, 3, 4, 5 and 6 about their possibility to respond to the change need expressed by participant 2. The query is indicated as step 407, and it substantially inquires whether one or more of participants 1, 3, 4, 5 or 6 would be in a situation where the electric energy used by the participant in this delivery period would be lower than the earlier pre-order of that participant. In other words, the queries sent in step 407 relate to a possibility of said other participants to decrease their earlier electric energy order during said time period.

It is assumed herein that participant 3 notices that the quantity of electric energy used by the participant in this delivery period will remain (or may be arranged to remain) lower than what participant 3 had predicted and ordered in the pre-order in step 401. This observation of participant 3 is indicated as step 408. Participants 1, 4, 5 and 6, instead, note that they do not have a need or possibility to reduce their electricity need in this delivery period. Thus, the arrangement receives a (positive) response to the queries of step 407 only from participant 3 in step 409. In the communication protocols between the arrangement and the participants it may of course be defined that each participant must send a response to the query, even if the response was negative. In this case, the queries would at the same time serve controlling the functioning of the data transfer connections and reaction capacity of the participants. However, to maintain clarity of the drawing, negative responses are not illustrated in Fig. 4.

In step 410, the arrangement updates the orders of electric energy of the participants for the current delivery period as indicated by the lowermost bar chart of Fig. 3. It illustrates by dashed lines a comparison with the top bar chart of Fig. 3, i.e. the pre-orders of the participants. Because the quantity of electric energy ordered by participant 3 was reduced by an equal amount as the quantity of electric energy ordered by participant 2 was increased, the change is not visible outside the portfolio: from the viewpoint of the electricity market, the quantity of electricity ordered by the set of participants in the portfolio for that delivery period remains the same. In step 411, the arrangement may forward a confirmation to participants 2 and 3, indicating that the transfer of ordered electric energy from the order of participant 3 to the order of participant 2 was successful. The confirmations may also include participant-specific data on what the quantity of electricity in the updated orders will cost to participants 2 and 3 in this delivery period.

In the best case, the transfer of ordered electric energy as described above from the order of one participant to the order of another one within the portfolio serves the interests of both of them directly. It is possible that participant 2 and participant 3 had both predicted their electricity need for this delivery period incorrectly to the same proportions, but oppositely. Thus, the operation corrected at the same time the inaccuracy in the predictions of both of them. It is also possible that the internal pricing of the portfolio is arranged so as to encourage at least one participant (here: participant 3) to decrease its order from the original one by actively reducing its electricity consumption in that delivery period. The participant making an additional order (here: participant 2) may be obligated within the portfolio to pay a slightly higher price than the original one for the electricity of the additional order, which is not, however, as high as what the corresponding additional order would cost as imbalance power in the electricity market outside the portfolio. Part of the additional price may be paid to participant 3 for the willingness to reduce its electricity consumption.

To maintain mutual anonymity between the participants, it is advantageous that participant 2 will not know the identity of the other participant having pre-ordered the electricity from which the additional electricity obtained by participant 2 was derived, and that participant 3 will not know the identity of the other participant receiving the quantity of electricity which participant 3 was ready to give up according to its notification. This accentuates the importance of the participant-specificness of the participant interfaces and the protectedness of the bus. The portfolio management entity naturally holds these data, because on their basis the portfolio management entity will in due course be able to direct invoicing to the correct participants based on the quantity of electricity actually used by them relative to the orders.

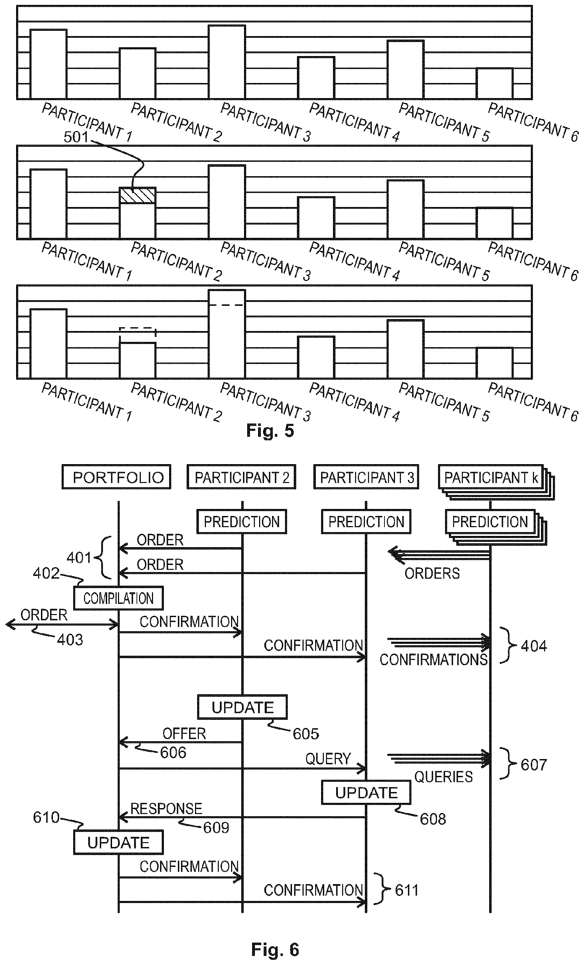

Fig. 5 and 6 illustrate another example situation, which differs from the situation of Fig. 3 and 4 in that the change triggering factor is not a need of one participant to order more electricity but a need of one participant to reduce the ordered quantity of electricity relative to the pre-order. Steps 401-404 proceed as described above with reference to Fig. 4, and in the top bar chart of Fig. 5 the quantities of electricity in the pre-orders of the participants are the same as in Fig. 3.

It is assumed herein that after the time limit for the pre-orders relating to this delivery period has expired, and thus after the delivery period has started, participant 2 notes that its electricity consumption in this delivery period will be reduced by block 501 from the prediction on the basis of which participant 2 made the pre-order. When participant 2 has made this observation in its prediction and tracking process (update 505), it sends corresponding change data over the participant interface used by the participant to the arrangement illustrated in Fig. 2. Because it is a reduction from the pre-order of participant 2 and participant 2 would thus like to sell the ordered excess electricity to the others, the change data indicated as step 606 are referred to as an offer in Fig. 6.

The arrangement processing orders within the portfolio reacts to the offer received in step 606 to decrease the earlier electric energy order of the participant using the respective participant interface by forwarding queries to the other participants in step 607. The queries relate to the willingness of participants 1, 3, 4, 5 and 6 to increase their earlier electric energy order during the current delivery period. In step 607, it is thus substantially inquired whether one or more of participants 1, 3, 4, 5 or 6 would be in a situation where it could use a higher quantity of electric energy than pre-ordered for that delivery period.

To facilitate comparison between the situations, it is assumed in the situation of Fig. 5 and 6 that participant 3 is ready to increase its earlier electric energy order during the current delivery period. Step 608 represents making the updated estimation according to which participant 3 arrives at this conclusion. The arrangement receives a (positive) response to the queries of step 607 only from participant 3 in step 609. It may be required that negative responses must also be sent, as described above with reference to Fig. 4.

In step 610, the arrangement updates the orders of electric energy of the participants for the current delivery period as indicated by the lowermost bar chart of Fig. 5, which illustrates by dashed lines a comparison with the top bar chart of Fig. 5, i.e. the pre-orders of the participants. Again, the change is not visible outside the portfolio, because from the viewpoint of the electricity market, the quantity of electricity ordered by the set of participants in the portfolio for that delivery period remains the same. In step 611, the arrangement may forward a confirmation to participants 2 and 3, indicating that the transfer of ordered electric energy from the order of participant 2 to the order of participant 3 was successful. The confirmations may also include participant-specific data on what the quantity of electricity in the updated orders will cost to participants 2 and 3 in this delivery period.

The motivation of participant 3 to agree to increase its order of electric energy may come from the pricing. Because the collective order of the portfolio does not change, participant 3 may obtain the additional electricity cheaper than by having to buy it as imbalance power from the open electricity market. Participant 3 may have been in a situation where some other factor such as increasing of a short-term production target of the production process would have favoured increasing the ordered quantity of electricity, but the advantage achieved by additional production would have been too small if the electricity needed for it had been bought as imbalance power. Because the same additional electricity now became available at a cheaper price, participant 3 found it worth to take the opportunity.

What has been described above with reference to Fig. 3 and 4 as to maintaining the anonymity of the participants also applies here. It is advantageous to arrange processing of the change data in a way that a specific participant will not know the association between the change it made to its pre-order and the changes in the quantities of electricity pre-ordered by the other participants.

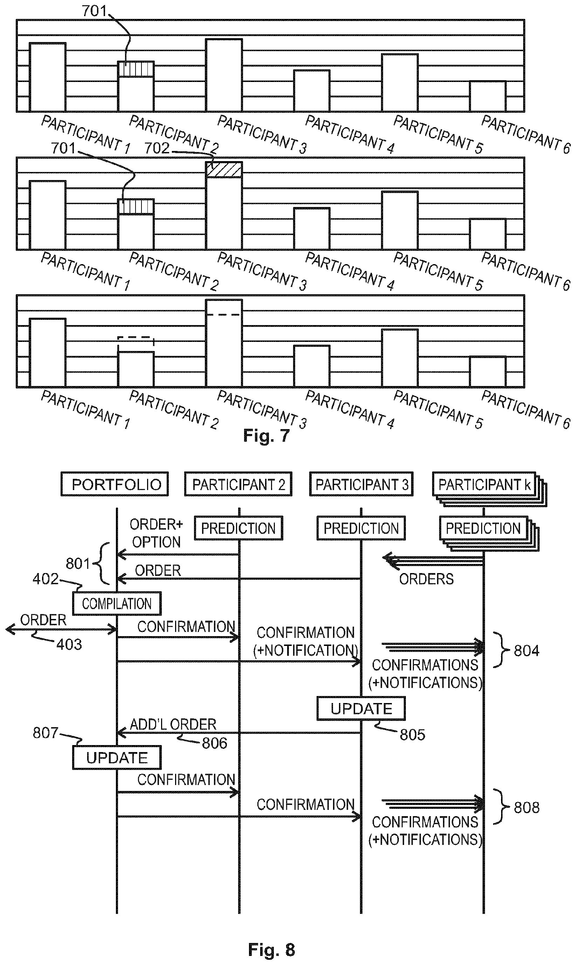

Fig. 7 and 8 illustrate a third example situation. It differs from the situations illustrated in the previous figures in that the participants may, in connection with their pre-orders, submit tentative offers, i.e. options, for changes which they could make under favourable conditions in their pre-ordered quantity of electric energy.

The top bar chart of Fig. 7 illustrates the quantities of electric energy pre-ordered by the participants for a specific delivery period. In Fig. 8, the arrangement receives the pre-orders in step 801. In connection with its pre-order, participant 2 submits a notification indicating that participant 2 would be ready to give up the proportion of block 701 of its pre-ordered quantity of electric energy. This notification is referred to as an option in Fig. 8. Because the pre-order of participant 2 still includes also the electricity indicated by block 701, collecting the collective order for the portfolio (step 402) and ordering the electric energy collectively pre-ordered by the portfolio from the electricity market (step 403) are performed in the same way as described above.

Step 804 indicates how the arrangement confirms to the participants that the quantities of electricity according to their pre-orders have been ordered. As in the previous examples, in this connection the arrangement may also inform the participants of the price for the quantity of electricity according to their pre-orders in case no relevant factors are changed. The characteristic feature of the example illustrated in Fig. 7 and 8 is that in the confirmations of step 804, the arrangement may also notify the participants (especially participants 1, 3, 4, 5, and 6) of the quantity of electricity according to block 701 which will be tentatively available for sudden needs of additional electricity in this delivery period, also after expiry of the time limit by which the pre-orders for the delivery period discussed herein must be made. This notification is not necessary, but it may be useful for the other participants. To maintain mutual anonymity between the participants, it is advantageous that participants 1, 3, 4, 5, and 6 are not disclosed the identity of the other participant making the pre-order with the option.

It is assumed herein that after said time limit has expired, and thus after the delivery period has started, participant 3 notes that its electricity consumption will be increased by block 702 from the prediction on the basis of which participant 3 made the pre-order. When participant 3 has made this observation in its prediction and tracking process (update 805), it sends corresponding change data over the participant interface used by the participant to the arrangement illustrated in Fig. 2. Because it is an addition to the pre-order of participant 3, the change data indicated as step 806 are referred to as an additional order in Fig. 8.

Under control of the portfolio management entity, the arrangement reacts to the change data received in step 806 by noting that it is possible to make the corresponding change by utilizing the option provided earlier by participant 2 in step 801. Thus, the arrangement updates the orders of electric energy of the participants for the current delivery period as indicated by the lowermost bar chart of Fig. 7, which illustrates by dashed lines a comparison with the top bar chart of Fig. 7, i.e. the pre-orders of the participants. Again, the change is not visible outside the portfolio, because from the viewpoint of the electricity market, the quantity of electricity ordered by the set of participants in the portfolio for that delivery period remains the same.

In step 808, the arrangement may forward a confirmation at least to participants 2 and 3, indicating that the transfer of ordered electric energy from the order of participant 2 to the order of participant 3 was successful. The confirmations may include participant-specific data on what the quantity of electricity in the updated orders will cost to participants 2 and 3 in this delivery period. If the protocol includes notifying the participants of options relating to possible changes to the earlier provided pre-orders, in step 808 the arrangement may also forward notifications to the other participants not involved in the recently implemented change. The purpose of this notification is to keep the other participants updated on the proportion of the earlier (in step 804) submitted option which is still available for new changes during the current delivery period. As in the other corresponding situations, the confirmations of step 808 are preferably forwarded to the participants in such a way that no participant will be able to find out the identity and roles of the other participants involved in the change in addition to the participant in question.

Fig. 7 and 8 illustrate a situation where the option submitted by the participant before expiry of the time limit for the pre-orders specifically relates to the preparedness of the participant to reduce the quantity of electricity consumed in that delivery period. If the option protocol is applied, the participant may also submit an option indicating its possibility to increase its electricity need in that delivery period from the quantity of its pre-order. The participant may also submit for the same delivery period both of the increase and the reduction option, indicating that if necessary, the participant may increase or reduce its electricity need during that delivery period, if such increase or reduction would match the change needs of some other participant in the same portfolio.

The option protocol according to Fig. 7 and 8 differs from the changes made according to Fig. 3-4 and 5-6 in that the option is conditional: the participant submitting the option may set the conditions to be fulfilled in order for it to make the change according to the option to the pre-ordered quantity of electricity. Typically, the condition for the option may be that the corresponding, opposite change must be found within the same portfolio, because the assumption is that changes within the portfolio are economically more advantageous for their makers. On the other hand, there may also be situations where for instance the price of imbalance power drops to an unexpectedly low level in some delivery period. In view of these situations, it may be possible for the participants to submit an option indicating that the participant may increase the quantity of electricity used by it in that delivery period if, in one way or another, the additional electricity becomes available at a cheaper price than a limit price set by the participant submitting the option. Additionally or alternatively, the option may include a condition as to whether the whole quantity of electric energy according to the option must be dealt with at once or whether the participant submitting the option would accept only partial implementation of the option.

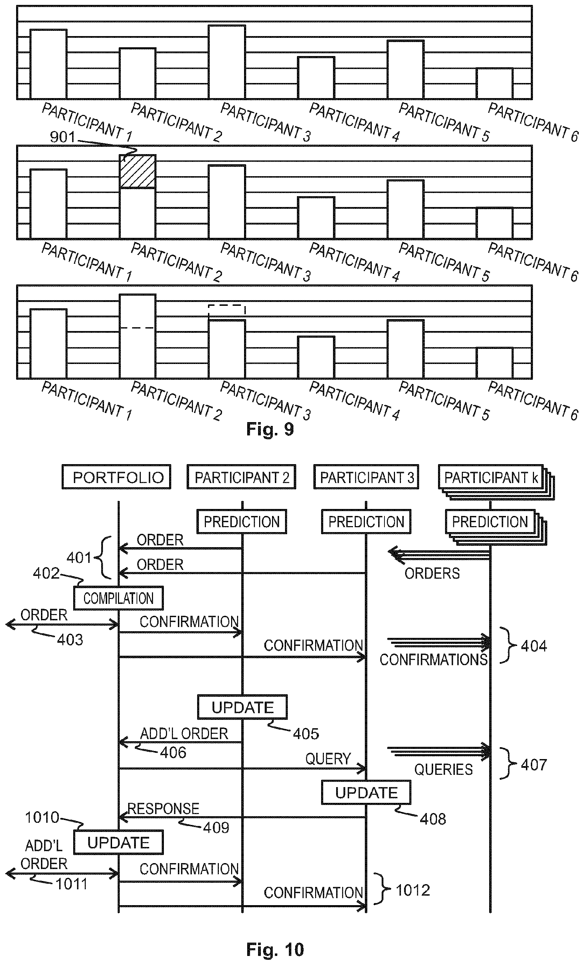

In the above-discussed situations according to Fig. 3-8, the change needed by one participant may be implemented completely within the portfolio, so that towards the electricity market, the quantity of electricity ordered by the portfolio collectively does not change. This is not always possible. Fig. 9 and 10 illustrate a fourth example situation which proceeds to step 409 substantially in the same way as the situation illustrated in Fig. 3 and 4. The difference is, however, that in step 405 of Fig. 10, the participant makes an observation in its prediction and tracking process that its electricity consumption in this delivery period will be relatively much higher (cf. block 901 in Fig. 9) than the prediction on the basis of which participant 2 made the pre-order.

Thus, when the arrangement receives in step 409 a response from participant 3 to the query forwarded in step 407, it concludes that a reduction according to the response from the quantity of electricity used by participant 3 is not sufficient to fully cover the addition needed by participant 2. The arrangement updates the orders of electric energy of the participants for the current delivery period according to the lowermost bar chart of Fig. 9 in step 1010, while also forwarding an additional order to the electricity market in step 1011. Imbalance power according to the additional order is provided to participant 2 to cover the proportion of the additional order of participant 2 which the reduction made by participant 3 in its electricity need was not enough to cover. The confirmations in step 1012 include data for participant 2 on how the ordered change was implemented and what the price of the change was.

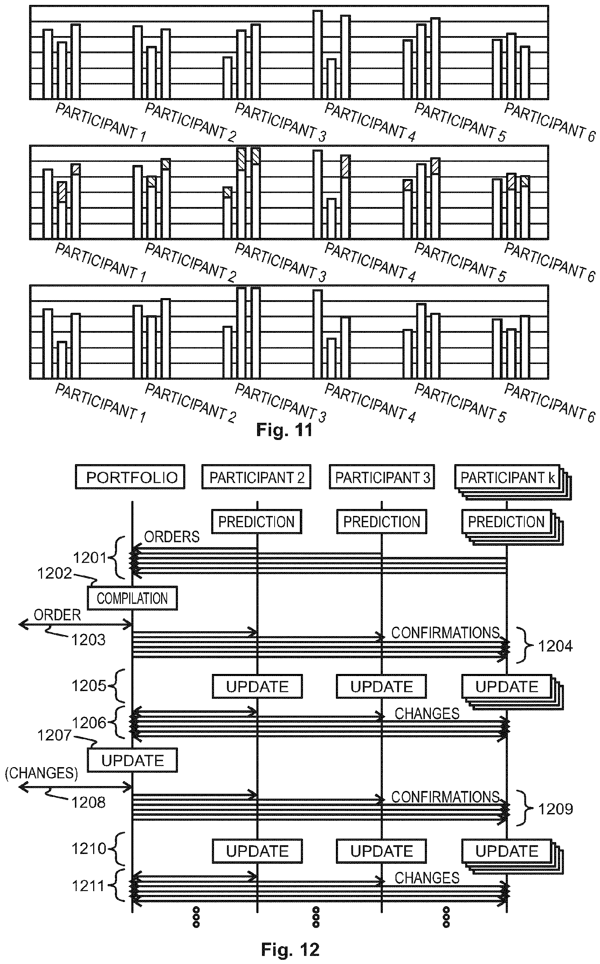

For the purpose of simplicity, the examples discussed above relate to situations where each participant makes only one pre-order for a specific delivery period, and where only one change is implemented for each prediction period involving only two participants. These simplifications are provided for better understanding of the illustrated and written disclosure, and have no limiting effect on the invention. Fig. 11 and 12 represent a fifth example situation, illustrating how the above-described ways to implement the changes may be applied for a number of times and between a number of parties for the same delivery period.

As illustrated in Fig. 11, each participant makes a number of pre-orders for a specific delivery period concerning subperiods of that delivery period. As a basis of the pre-orders, each participant uses a prediction indicating their electricity need and how it is divided over the subperiods during that delivery period. The delivery period may be for instance one day, and each subperiod may be one hour. The arrangement receives the pre-orders in step 1201 and uses them to collect the collective order corresponding to the combined electricity need of the portfolio in step 1202. Step 1203 indicates how the electric energy pre-ordered collectively by the portfolio is ordered from the electricity market, and step 1204 indicates how the arrangement confirms to the participants that the quantities of electricity according to their pre-orders have been ordered.

Step 1205 illustrates how any of the participants in that portfolio may notice after their pre-order that at least one of the electricity needs submitted in the pre-order is too low or too high. In step 1206, the arrangement may receive change data from any number of participants, and the change data may include any change needs, unconditionally and/or as options. Step 1206 may also include one or more queries which the arrangement may forward to the participants. In step 1207, the arrangement primarily tries to match the submitted change needs and possibilities within the portfolio, such that the change would be as small as possible outside the portfolio, from the viewpoint of the electricity market. If it is not possible to match all the change needs and possibilities within the portfolio and/or if, in order to implement one or more change needs and/or possibilities, it is advantageous to make a change to the collective order of the portfolio, the arrangement deals with the corresponding change with the electricity market in step 1208. The confirmations by which the arrangement notifies the participants of implementation of the changes are indicated as step 1209.

There may be several such change rounds for the same delivery period, which in Fig. 12 is indicated by next change round initiating steps 1210 and 1211. The portfolio management entity may set a schedule indicating how the change needs submitted by the participants are processed. Additionally or alternatively, the portfolio management entity may give a notification that even one notification of a change need which is at least higher than a specific threshold value immediately starts a change round, even if it was not yet scheduled for that time according to the pre-set schedule.

It is possible that two or more participants may send respective change data simultaneously or almost simultaneously. It is also possible that when a query is sent to the participants about their possibility to decrease their earlier electric energy order, their willingness to increase their earlier electric energy order and/or their possibility to offer electric energy produced by them to the others, there will be several responses to the query, only some of which are implementable. The prioritization between participants may be arranged in many different ways. One very straightforward possibility is to process all change data and responses received from the participants on a first come, first served basis, such that the first received change data or response will have the best possibilities to become implemented. Another possibility is to implement each of the simultaneous or almost simultaneous requested or proposed operations in part, for instance at equal quantities or proportionately according to the quantities of electric energy earlier submitted by the participants relative to each other. Yet another possibility is to implement the simultaneous or almost simultaneous requested or proposed operations such that the participant having the most accurately predicted its consumption or production of electric energy in that delivery period (or in a previous delivery period, or in some set of earlier delivery periods, possibly weighing the most recent delivery periods) will have the best chances to get the request or proposition implemented. The latter possibility is advantageous in that it encourages the participants to make their participant-specific predictions as accurately as possible.

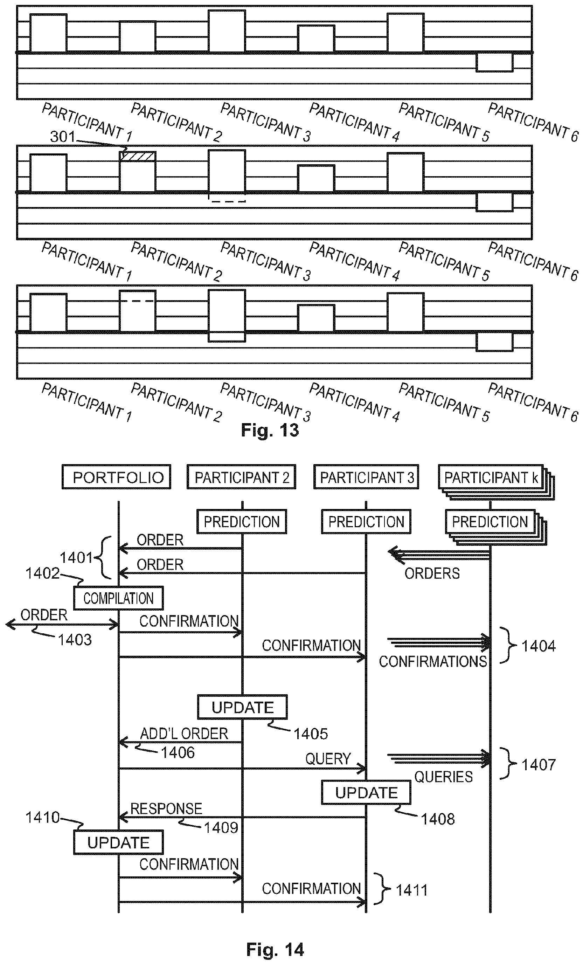

Fig. 13 illustrates yet another imaginary example of development of the electricity need of six participants in the same portfolio. The top bar chart illustrates a pre-order of each participant for a specific delivery period. The arrangement according to Fig. 2 has thus received, over the participant interfaces, the pre-orders according to the top bar chart of Fig. 13 from the participants before expiry of the time limit for making the pre-orders for the delivery period discussed herein. In the communication scheme of Fig. 14, these pre-orders are indicated as step 1401. In contrast to the previous examples, it is assumed herein that at least one of the participants, in this case participant 6, predicts that it will operate, at least for this delivery period, as a seller and not a buyer. Thus, the "orders" in step 1401 are to be understood as including both orders and offers.

In the bar charts of Fig. 13, the columns extending above the horizontal axis indicate electric energy to be ordered, while the columns extending below the horizontal axis indicate electric energy to be produced and provided to the others.

The quantity of electricity ordered by each participant as a pre-order - or in the case of participant 6, the quantity of electricity offered in advance - is based on a participant-specific prediction made by the participant. Participants 2 and 3 are indicated separately in Fig. 14, because in this example their operation again illustrates adaptation to changes in the need of electric energy within the portfolio. The column on the right side in Fig. 14 represents participants 1, 4, 5 and 6 collectively.

Step 1402 in Fig. 14 indicates collecting the pre-orders 1401 of electric energy made before expiry of the time limit into a collective order, and step 1403 indicates how the electric energy pre-ordered collectively by the portfolio is ordered from the electricity market. The difference to the previous examples is that the quantity of electric energy ordered from the electricity market in step 1403 may now be lower, because part of the electric energy need of participants 1-5 may be covered by the electric energy provided by participant 6.

Step 1404 indicates how the arrangement confirms to the participants that the quantities of electricity according to their pre-orders have been ordered. In the case of participant 6, the confirmation includes data indicating that a buyer has been found for the quantity of electricity offered by participant 6, i.e. the confirmation is in fact an order. In this connection the arrangement may also inform the participants of the price for the quantity of electricity according to their pre-orders in case no relevant factors are changed. If, when implementing step 1404, the time limit by which the pre-orders for the delivery period discussed herein must be made has not yet expired, one or some participants may still change their pre-order. This would mean repeating steps 1401, 1402, 1403 and 1404 in Fig. 14.

It is assumed herein that after said time limit has expired, and thus after the delivery period has started, participant 2 notes that its electricity consumption in this delivery period will be increased by block 301 from the prediction on the basis of which participant 2 made the pre-order. When participant 2 has made this observation in its prediction and tracking process (update 1405), it sends corresponding change data over the participant interface used by the participant to the arrangement illustrated in Fig. 2. Because it is an addition to the pre-order of participant 2, the change data indicated as step 1406 are referred to as an additional order in Fig. 14.

Under control of the portfolio management entity, the arrangement reacts to the change data by sending a query to participants 1, 3, 4, 5 and 6 about their possibility to respond to the change need expressed by participant 2. The query is indicated as step 1407, and it substantially inquires whether one or more of participants 1, 3, 4, 5 or 6 can respond to the additional need in some way. In other words, the queries sent in step 1407 relate to a possibility of said other participants to decrease their earlier electric energy order during said time period and/or produce more electric energy during said time period.

It is assumed herein that participant 3 notices that it may produce a certain quantity of electric energy and provide it to the others in that delivery period in addition to what it had predicted as its consumption need and ordered in the pre-order in step 1401. This observation of participant 3 is indicated as step 1408. Participants 1, 4, 5 and 6, instead, note that they do not have a need or possibility to reduce their electricity need in this delivery period or produce electric energy to be provided to the others. Thus, the arrangement receives a (positive) response to the queries of step 1407 only from participant 3 in step 1409. To maintain clarity of the drawing, negative responses of the other participants are not illustrated in Fig. 14.

That participant 3 considers it to be economically viable to order electric energy from outside as well as to provide electric energy outside during the same delivery period may be due to the pricing, for example. The apparatus by which participant 3 produces electric energy may be such that it would advantageously be caused to produce electricity only if the price of electricity is sufficiently high.

In step 1410, the arrangement updates the orders of electric energy of the participants for the current delivery period as indicated by the lowermost bar chart of Fig. 13. It illustrates by dashed lines a comparison with the top bar chart of Fig. 13, i.e. the pre-orders of the participants. Because, in addition to the earlier submissions, participant 3 was able to produce electric energy as much as the quantity of electric energy ordered by participant 2 was increased, the change is not visible outside the portfolio: from the viewpoint of the electricity market, the quantity of electricity ordered by the set of participants in the portfolio for that delivery period remains the same. In step 1411, the arrangement may forward a confirmation to participants 2 and 3, indicating that the electric energy offered by participant 3 has been successfully used to cover the additional need of participant 2. The confirmations may also include participant-specific data on how the quantity of electricity in the updated orders and offers in this delivery period will be priced for participants 2 and 3.

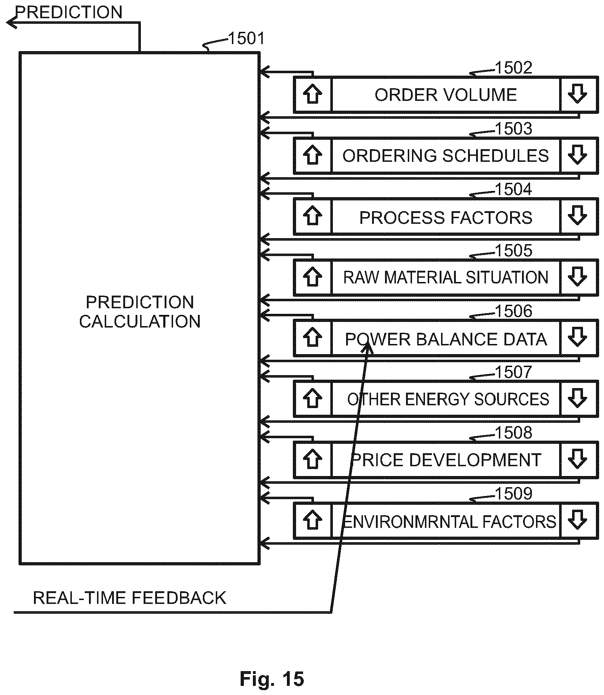

Fig. 15 schematically illustrates an example of prediction calculation which the participant may apply to predict its electricity need. Prediction calculation 1501 is a technical optimization scheme which may receive inputs from many different sources. Each input may indicate a cause to reduce or increase the electricity need. As examples of the inputs, Fig. 15 indicates order volume and its development 1502, ordering schedules and their development 1503, process factors 1504 such as operating condition of various devices of the production line and their malfunctions, raw material situation 1505, data on power balance, i.e. quantities of demand and supply within the portfolio 1506, possibility to obtain energy from alternative sources such as own solar panels 1507, actual and predicted price development of factors affecting the production process 1508, and environmental factors 1509 such as temperature, amount of wind, amount of rainfall, and so on.

Fig. 15 specifically illustrates how the data on changes of the power balance within the portfolio may operate as real-time feedback for the prediction calculation of the participant. Determining of the final price data, i.e. what the electric energy in each electricity product will cost to each of the participants, may be slow, or may even be performed afterwards. However, the rules applied in the portfolio as to how the prices will be determined may (and should) be known by the participants in the portfolio. This not only applies to the price data for the electricity market, but specifically also to the data on how the change needs submitted within the portfolio affect the price of electricity. As stated above, it is possible to influence the preparedness of the participants to change their electricity need during the current delivery period by determining that a participant accepting a change may obtain a price advantage at the expense of the participant proposing the change. The change data and responses to the queries about responding to the change needs submitted by others may both cause quick changes in data on the internal power balance of the portfolio. Such real-time data, available after the delivery period has already started, on the power balance between one's own electricity need and that of the others has not been available in the prior art arrangements, because in those arrangements the price has been determined on the basis of the pre-orders, and only the price of imbalance power has been able to fluctuate after expiry of the time limit for making the pre-orders for that delivery period.

The data on power balance may be a triggering factor when one or more participants decide to send change data to the arrangement. Thus, although the description above mainly relates to situations where a specific participant makes a decision to send change data on the basis of its prediction and tracking process, this does not necessarily merely imply inaccuracies affecting that participant in its earlier prediction. The prediction and tracking process of the participant may give a result according to which, on the basis of the latest data on power balance, it would be advantageous to change the electricity need, for instance by making some change in the operation of the current production process.

It is advantageous to choose the participants in the same portfolio such that it would be likely that they may have at the same time opposite change needs in terms of their electricity consumption in a specific delivery period. It is not advantageous to collect the portfolio for instance only from participants located geographically very close to each other and all having significant wind or solar power production, because for all of them, a sudden change of wind from what has been predicted causes a similar change need.

The portfolio idea is the most useful for participants which for one reason or another find it especially difficult to accurately predict their electricity need and/or the electricity need of which is too low to be considered as such in the prior art electricity market and/or which have a significant optional scope for adjustment in their instantaneous electricity need.

A special advantage of the arrangement according to the invention is the rate at which the participants may make changes to their electricity need without similar disadvantageous consequences which are typical of the prior art solutions. It is necessary that the arrangement according to the invention is carried out by computers and secured data transmission connections between them, such that the continuously updated prediction calculation at the participant end, processing of the change data in the arrangement according to the invention and the exchange of data between them are all automated. Only this way it is possible to cause the arrangement to operate quickly enough to bring significant advantage to the participants. At the time of writing this text, the time scales are such that although continuously updated data on the development of factors affecting the electricity need may well be available for 36 hours in advance, changes may come even within minutes, in which case quick reaction and possibility to make changes accordingly are beneficial.

The data processing rate may be represented by a time cycle encompassing updating the positions within the portfolio. The positions mean data on the ratio of the quantity of electric energy ordered (and/or offered) by each participant to the most recent data on the actual need (or production) of electric energy. The arrangement according to Fig. 2 may be arranged to update the positions within the portfolio every time a factor relating to them is changed. One example of a change of a factor relating to the positions is the change data received by the arrangement from at least one participant.

To update the positions, the arrangement is arranged to perform specific operations. They encompass, firstly, receiving change data over at least one participant interface. As stated above, the change data relate to an order and/or offer of electric energy of a participant using the participant interface. Said operations also encompass forwarding queries over the other participant interfaces to the other participants using the other participant interfaces. The queries relate to a possibility of the other participants to respond to the changes according to the above-mentioned change data during the current delivery period. Further, said operations encompass receiving responses to the queries over the participant interfaces, and updating the compilation data. The latter is done using the change data and the responses received via the participant interfaces. The time cycle during which these operations are performed should be as short as possible. Its length may be less than ten minutes, but even more advantageous and better updated operation is achieved if the time cycle is less than one minute, or even shorter, such as less than ten seconds.

Updating of the positions may also be performed in a time cycle the length of which depends on the quantity of electric energy related to the change data received via one or more participant interfaces. This has to do with the fact that the technical capabilities of the participants to participate in the internal communication of the portfolio may be different, typically reflecting the size of the participant as a buyer and/or seller. It may be advantageous to arrange the connections of the participants to the arrangement such that only large participants have a completely real-time connection, capable of operating within seconds. In this case, the above-mentioned operations could be performed in a shorter time cycle for a higher quantity of electric energy, and vice versa.

One advantage of the invention is that due to the invention, it is possible to better than before include, in the production of electric energy, renewable energy components such as solar and wind power, the production of which is typically more difficult to be accurately predicted than the traditional forms of electric energy production. The possibility of the participants to adjust their electricity need may be expressed as temporal resolution, i.e. resolution with respect to time. In the prior art model, it is typically the most advantageous for a participant to use the quantity of electricity submitted in the pre-order during the delivery period, even if other factors could favour changing the pre-order. The resolution in the prior art is thus equal to the length of the delivery period. In the portfolio model the resolution becomes much finer, because the possibilities to submit change data and make corresponding changes within the portfolio are only limited by the speed of the automated systems carrying out the data processing as described above.

By means of the invention it is also possible to reduce emissions in the production of electric energy, because the so called peak load power, i.e. production capacity applied for the time of the highest consumption peaks, typically based on highly emissive forms of production, is not needed as often and as much. If such a consumption peak would threaten, even after the start of the delivery period, the portfolio may receive a signal from the electricity market, indicating that it would now be advantageous to encourage at least part of the participants to reduce their electricity need for some time. Additional emission allowances required by the highly emissive form of production could be so expensive that it is more advantageous for electricity producers to rather sell slightly less electricity during the consumption peak.

In one embodiment, the arrangement according to the invention is arranged to use as one "participant" a battery pack forming a type of instant storage of electric energy. The quantity of electric energy charged in or discharged from the battery pack may be used by the arrangement to cover, during the current delivery period, at least part of a difference between a predicted total electricity consumption and a realized electricity consumption of the other participants. The battery pack may have some target charge level, which typically is not a fully charged level, so that if necessary, the battery pack may be charged with at least part of electric energy included in the pre-order made by the portfolio from the electricity market but not having been consumed by the participants in the portfolio due to changed conditions and/or an inaccurate prediction. Correspondingly, it is advantageous to scale the target charge level of the battery pack (and the capacity of the battery pack) such that if necessary, the electric energy discharged from the battery pack may cover at least part of an additional need of electric energy which was not included in the pre-order made by the portfolio from the electricity market but which, due to changed conditions and/or an inaccurate prediction, should currently be delivered to the participants in the portfolio in addition to the earlier ordered quantity.

## Claims

1. An arrangement for processing orders of electric energy made by a set of participants, **characterized in that**
- the arrangement comprises a management interface for processing data representing orders and possible offers of electric energy made by several of said participants for a time period extending to the end of a current delivery period,
- the arrangement comprises a set of participant interfaces, each arranged for processing data representing orders and possible offers of electric energy made by one of said participants for said time period,
- the arrangement comprises a secured data transfer bus between said management interface and said participant interfaces, the secured data transfer bus being arranged to keep said participants anonymous to each other
- the arrangement is arranged to maintain compilation data on the orders and possible offers of electric energy received via said participant interfaces for said time period,
- the arrangement is arranged to respond to change data received over one or more of said participant interfaces concerning an order or offer of electric energy of a participant using the participant interface by forwarding queries over the others of said participant interfaces to the other participants using said other participant interfaces about a possibility of said other participants to respond to change needs according to said received change data during said time period, and
- the arrangement comprises an external interface for providing purchase offers corresponding to said compilation data to a grid operator operating in an electricity market and for receiving price data representing a price determined in the electricity market for the electricity ordered according to said purchase offers.

2. The arrangement according to claim 1, **characterized in that** it is arranged to respond to an additional order received over one of said participant interfaces for said time period to increase the earlier electric energy order of a participant using that participant interface by forwarding queries over the others of said participant interfaces to the other participants using said other participant interfaces about a possibility of said other participants to decrease their earlier electric energy order during said time period.

3. The arrangement according to claim 1 or 2, **characterized in that** it is arranged to respond to an offer received over one of said participant interfaces for said time period to decrease the earlier electric energy order of a participant using that participant interface by forwarding queries over the others of said participant interfaces to the other participants using said other participant interfaces about willingness of said other participants to increase their earlier electric energy order during said time period.

4. The arrangement according to any of the preceding claims, **characterized in that** it is arranged to use as one of said participants a battery pack, the quantity of electric energy charged in or discharged from the battery pack being used by the arrangement to cover, during said delivery period, at least part of a difference between a predicted total electricity consumption and a realized electricity consumption of said participants.

5. The arrangement according to any of the preceding claims, **characterized in that** it is arranged to perform operations encompassing
- said receiving of change data over at least one of said participant interfaces concerning an order or offer of electric energy of a participant using the participant interface,
- said forwarding of queries over the others of said participant interfaces to the other participants using the other participant interfaces about a possibility of said other participants to respond to change needs according to said received change data during said time period,
- receiving responses to said queries over said participant interfaces, and
- updating said compilation data using the change data and the responses received via said participant interfaces
in a time cycle of less than ten minutes, more preferably less than one minute, and most preferably less than ten seconds.

6. The arrangement according to claim 5, **characterized in that** it is arranged to perform said operations in a time cycle the length of which depends on the quantity of electric energy related to the change data received via one or some of said participant interfaces.

7. A method for processing orders of electric energy made by a set of participants, **characterized in that** the method comprises
- receiving orders and possible offers of electric energy made by several of said participants for a time period extending to the end of a current delivery period,
- maintaining compilation data on the orders and possible offers of electric energy received from said participants for said time period,
- responding to change data received from one or more participants concerning an order or offer of electric energy of a participant using a respective participant interface by forwarding queries to the other participants about a possibility of said other participants to respond to change needs according to said received change data during said time period,
- keeping said participants anonymous to each other in all of the above-described data exchange,
- providing, via an external interface, purchase offers corresponding to said compilation data to a grid operator operating in an electricity market, and
- receiving, via said external interface, price data representing a price determined in the electricity market for the electricity ordered according to said purchase offers.

8. The method according to claim 7, **characterized in that** it comprises responding to an additional order received from one of said participants for said time period to increase the earlier electric energy order of that participant by forwarding queries to said other participants about a possibility of said other participants to decrease their earlier electric energy order during said time period.

9. The method according to claim 7 or 8, **characterized in that** it comprises responding to an offer received from one of said participants for said time period to decrease the earlier electric energy order of the participant by forwarding queries to said other participants about willingness of said other participants to increase their earlier electric energy order during said time period.

10. The method according to any of the claims 7-9, **characterized in that** it comprises using a battery pack, the electric energy charged in or discharged from the battery pack being used to cover, during said delivery period, at least part of a difference between a predicted total electricity consumption and a realized electricity consumption of said participants.

11. The method according to any of the claims 7-10, **characterized in that** it comprises performing operations encompassing
- said receiving of change data over at least one of said participant interfaces concerning an order or offer of electric energy of a participant using the participant interface,
- said forwarding of queries over the others of said participant interfaces to the other participants using the other participant interfaces about a possibility of said other participants to respond to change needs according to said received change data during said time period,
- receiving responses to said queries over said participant interfaces, and
- updating said compilation data using the change data and the responses received via said participant interfaces
in a time cycle of less than ten minutes, more preferably less than one minute, and most preferably less than ten seconds.

12. The method according to claim 11, **characterized in that** it comprises performing said operations in a time cycle the length of which depends on the quantity of electric energy related to the change data received from one or some of said participants.

13. A computer program product including one or more sets of machine-readable instructions which, when executed by one or more processors, are arranged to cause the performing of the method according to any of the claims 7-12.
